# EUROPÄISCHE PATENTSCHRIFT

(11) **EP 3 855 251 B1**
(45) Veröffentlichungstag und Bekanntmachung des Hinweises auf die Patenterteilung: **25.11.2026**
(21) Anmeldenummer: 21152680.1
(22) Anmeldetag: 21.01.2021
(51) Int. Cl.: G03H 1/00, G03H 1/02, G03H 1/04, G03H 1/20, G03H 1/22

(54) **SICHERHEITSELEMENT MIT DOPPELHOLOGRAMM UND VERFAHREN ZU DESSEN HERSTELLUNG**
SAFETY ELEMENT WITH DOUBLE HOLOGRAM AND METHOD FOR PRODUCING THE SAME
ÉLÉMENT DE SÉCURITÉ À DOUBLE HOLOGRAMME ET SON PROCÉDÉ DE FABRICATION

(30) Priorität: 21.01.2020 DE 102020200669
(43) Veröffentlichungstag der Anmeldung: 28.07.2021
(73) Patentinhaber: Bundesdruckerei GmbH, 10969 Berlin (DE)
(72) Erfinder: Kunath, Christian, 12203 Berlin (DE); Sprenger, Martin, 10317 Berlin (DE); Dr. Klünder, Kathrin, 10997 Berlin (DE); Gahlbeck, Jeffry, 15517 Fürstenwalde (DE)
(74) Vertreter: Patentanwälte Bressel und Partner mbB

(56) Entgegenhaltungen:
- EP-A2- 0 701 183
- GB-A- 2 254 166
- JP-A- 2013 164 524
- LIANGCAI CAO ET AL: "Enhancement of recording and readout for the photopolymer holographic disk system by using a conjugate structure", PROCEEDINGS OF SPIE, IEEE, US, vol. 6827, no. 68270X, 21 November 2007 (2007-11-21), pages 68270X - 1, XP007904370, ISBN: 978-1-62841-730-2

## Beschreibung

Die Erfindung betrifft allgemein Sicherheitselemente und Verfahren zu deren Herstellung und insbesondere ein Verfahren zum Herstellen eines Doppelhologramms, ein Sicherheitsdokument mit einem solchen Doppelhologramm sowie eine Vorrichtung zum Herstellen eines Doppelhologramms.

Sicherheitselemente sind körperlich ausgebildete Einheiten, die mindestens ein Sicherheitsmerkmal umfassen. Ein Sicherheitsmerkmal ist ein Merkmal, welches genutzt wird, um die Authentizität und Unverfälschtheit eines Gegenstands, der mit dem Sicherheitselement und dessen Sicherheitsmerkmal verknüpft ist, nachzuweisen. Sicherheitselemente können Halbzeuge sein, die beispielsweise in einen Gegenstand eingearbeitet werden oder fertige Sicherheitsartikel sind. Sicherheitsdokumente und Wertdokumente stellen Beispiele für Sicherheitselemente dar. Ebenso können Sicherheitsdokumente auch Sicherheitselemente umfassen, beispielsweise in Form von eingearbeiteten Substratschichten aufgebrachten Patches usw.

Eine Gruppe von Sicherheitselementen und Sicherheitsmerkmalen lässt sich optisch verifizieren. Unter dem Verifizieren versteht man das Überprüfen eines Sicherheitsmerkmals auf dessen Vorhandensein und/oder der Integrität des Sicherheitsmerkmals und des Sicherheitselements, in dem das Sicherheitsmerkmal ausgebildet ist. Die Gruppe der optischen Sicherheitsmerkmale und Sicherheitselemente umfasst beugungsoptisch ausgebildete Sicherheitsmerkmale. Diese beugen zur Verifikation verwendetes Licht. Eine große Gruppe von Beugungselementen, die in Wert- und/oder Sicherheitsdokumenten und Sicherheitselementen eingesetzt werden, sind Hologramme.

Unter einem Hologramm wird eine durch Interferenz von kohärentem Licht erzeugte oder erzeugbare Struktur verstanden, die in einem Aufzeichnungsmaterial gespeichert ist. Hologramme werden in sogenannte dünne und dicke Hologramme unterschieden. Die Unterscheidung orientiert sich daran, welche Materialstärke die Schicht aufweist, in der die Interferenzstruktur gespeichert ist. Ist die Schichtdicke in der Größenordnung der Wellenlänge des Lichts, mit dem die Interferenzstrukturen hergestellt sind, bzw. herstellbar sind, so spricht man von einem dünnen Hologramm. Ist die Materialstärke des Aufzeichnungsmaterials, in dem die Interferenzstrukturen gespeichert sind, hingegen in der Größenordnung des mehrfachen, beispielsweise des zehnfachen, der Wellenlänge des Lichts, mit dem die Interferenzstrukturen hergestellt sind oder herstellbar sind, gespeichert, so spricht man von einem sogenannten dicken Hologramm oder Volumenhologramm. Die Eigenschaften von dünnen Hologrammen und dicken Hologrammen unterscheiden sich zum Teil erheblich. Volumenhologramme oder dicke Hologramme, zeichnen sich beispielsweise dadurch aus, da diese eine hohe Winkel- und Wellenlängenselektivität aufweisen. Dies bedeutet, dass ein Volumenhologramm, welches mit einer Wellenlänge aufgezeichnet ist, auch nur mit einer Wellenlänge reproduzierbar ist. Unter dem Reproduzieren eines Hologramms wird das Erzeugen einer Lichtstrahlung an dem Hologramm verstanden, wenn dieses mit Referenzlicht beleuchtet wird. Diese erzeugte Lichtstrahlung wird auch als Rekonstruktionslichtstrahlung bezeichnet. Bei der Reproduktion oder Rekonstruktion eines Hologramms wird eine Lichtstrahlung erzeugt, welche die Informationen einer Objektlichtstrahlung umfasst, deren Wechselwirkung mit der Referenzlichtstrahlung bei der Herstellung des Hologramms die Interferenzstrukturen erzeugt hat, die in dem Hologramm gespeichert sind.

Im Stand der Technik sind vielfältige verschiedene Hologramme beschrieben, die beispielsweise in Sicherheitsdokumenten eingesetzt werden.

Die GB 2 254 166 A beschreibt ein Verfahren zur Massenherstellung von Hologrammen zu Sicherheitszwecken. Bereiche eines lichtempfindlichen Materials werden nacheinander durch eine Belichtungsposition geführt, an der in jedem Bereich jeweils ein einzigartiges Hologramm gebildet wird durch Interferenz zwischen einem kohärenten Referenzlichtstrahl und einem kohärenten Lichtstrahl, der ein Bild trägt. Das Bild wird für jeden nachfolgenden Bereich teilweise oder vollständig geändert und kann von einer aktualisierbaren Anzeige, wie beispielsweise einer Flüssigkristallanzeige, erzeugt werden.

Liangcai Cao et al. beschreiben in dem Artikel "Enhancement of recording and readout for the photopolymer holographic disk system by using a conjugate structure", veröffentlicht in PROCEEDINGS OF SPIE, IEEE, US, (20071121), vol. 6827, no. 68270X, ISBN 978-1-62841-730-2, Seiten 68270X - 1 bis 7, ein Verfahren zum Beschleunigen der holografischen Speicherung in volumenholografischen Discs.

Die EP 0 701 183 A2 beschreibt ein Hologramm-Kopiersystem, welches einen ersten Rekonstruktionsstrahl (RB1) und einen zweiten Rekonstruktionsstrahl (RB2) umfasst, der bezüglich des ersten Rekonstruktionsstrahls kohärent ist. Ein erstes Masterhologramm wechselwirkt mit dem ersten Rekonstruktionsstrahl, um einen ersten gebeugten Strahl zu erzeugen. Ein zweites Masterhologramm wechselwirkt mit dem zweiten Rekonstruktionsstrahl, um einen zweiten gebeugten Strahl zu erzeugen. Eine holographische Aufzeichnungsschicht spricht auf den ersten und zweiten Rekonstruktionsstrahl und den ersten und zweiten gebeugten Strahl an, wodurch ein erstes Hologramm durch Interferenz des ersten Rekonstruktionsstrahls und des ersten gebeugten Strahls gebildet wird und ein zweites Hologramm durch Interferenz des zweiten Rekonstruktionsstrahls (RB2) und des zweiten gebeugten Strahls (DB2) gebildet wird.

Die JP 2013 164524 A beschreibt die Bereitstellung eines Bildanzeigekörpers mit ausgezeichneter Anwendbarkeit. Ein Bildanzeigekörper umfasst eine Hologramm-Aufzeichnungsschicht. Die Hologramm-Aufzeichnungsschicht weist eine erste Hauptebene und eine zweite Hauptebene auf. In der Hologramm-Aufzeichnungsschicht werden zumindest ein erstes Bild und ein zweites Bild aufgezeichnet. Bei Beleuchtung von der Seite der ersten Hauptebene wird das erste Bild auf der Seite der ersten Hauptebene reproduziert. Bei Beleuchtung von der Seite der zweiten Hauptebene wird das zweite Bild auf der Seite der ersten Hauptebene in einem Bereich wiedergegeben, der den Bereich überlappt, in dem das erste Bild wiedergegeben wird.

Die EP 0 896 260 A2 beschreibt beispielsweise eine Vorrichtung für die Herstellung von individuellen Hologrammen zum Sichern von Dokumenten. Beschrieben ist eine Vorrichtung zur Herstellung von Hologrammen aus einem Masterhologramm einer Mattscheibe, die mit einer oder mehreren Wellenlängen und einem oder mehreren Referenzwinkeln aufgenommen ist. Mit diesem Masterhologramm können stereoskopische und farbige individualisierte Hologramme im Kontaktkopierverfahren hergestellt werden. Die Vorrichtung besitzt eine Strahlungsquelle für Laserstrahlung zum Bestrahlen des Masters und eines Films. Damit die Hologramme mit verschiedenen gespeicherten Informationen auf einfache Weise hergestellt werden können, ist eine Modulationseinrichtung, insbesondere eine Flüssigkristallanzeige (LCD), vorhanden, um die kohärente Laserstrahlung zu modulieren.

Mit der im Stand der Technik beschriebenen Vorrichtung werden Hologramme hergestellt, die Volumenreflexionshologramme sind. Bei einem Volumenreflexionshologramm wird das Rekonstruktionslicht von einer Seite auf das Hologramm, das heißt, das Aufzeichnungsmaterial, in dem die Interferenzinformation gespeichert ist, eingestrahlt und die rekonstruierte Lichtstrahlung auf derselben Seite, auf der die Einstrahlung des Rekonstruktionslichts erfolgt, das heißt, reflektierend erzeugt. Solche Sicherheitsmerkmale sind beispielsweise auf deutschen Personaldokumenten wie Reisepässen oder Personalausweisen verwendet und zeigen unter anderem das Lichtbild des Ausweisinhabers sowie persönliche Informationen, wie beispielsweise dessen Namen. Hierbei wird die im Master enthaltene Mattscheibe in einem Kontaktkopierverfahren ortsaufgelöst mit unterschiedlicher Helligkeit kopiert, um das Lichtbild zu erzeugen.

Um eine gute Absicherung und eine schwere Nacharbeitbarkeit von Sicherheitselementen und Sicherheitsmerkmalen zu erreichen, wird es von Sicherheitselementherstellern angestrebt, möglichst komplexe Sicherheitsmerkmale auszubilden. Der Erfindung liegt somit die Aufgabe zugrunde, ein verbessertes optisches holografisches Sicherheitselement und Sicherheitsmerkmal und sowie ein Verfahren zu dessen Herstellung und eine Vorrichtung anzugeben, mit denen Sicherheitselemente und Sicherheitsmerkmale geschaffen werden, die neuartige zusätzliche optische Merkmale zu den bisher bekannten Merkmalen für eine Absicherungsmöglichkeit von Sicherheitsdokumenten und Gegenständen aufweisen.

Die Aufgabe wird erfindungsgemäß durch ein Verfahren zum Herstellen eines Doppelhologramms mit den Merkmalen des Patentanspruchs 1, ein Sicherheitsdokument mit einem Doppelhologramm mit den Merkmalen des Patentanspruchs 7 sowie eine Vorrichtung zum Herstellen eines Doppelhologramms mit dem Merkmal des Patentanspruchs 8 geschaffen. Vorteilhafte Ausgestaltungen der Erfindung ergeben sich aus den Unteransprüchen.

Der Erfindung liegt die Idee zugrunde, bei der Belichtung eines Volumenreflexionshologramms das durch das Aufzeichnungsmaterial hindurchtretende Referenzlicht in sich selbst zurück zu reflektieren, sodass das reflektierte Referenzlicht auf das Interferenzmuster einwirkt. Von einem so hergestellten Doppelhologramm ist es möglich, in einem sogenannten Kontaktkopierverfahren weitere Doppelhologramme zu erzeugen.

Ferner ist vorgesehen, ein Sicherheitsdokument mit einem solchen Doppelhologramm, welches gemäß einem der beschriebenen Verfahren hergestellt ist, zu erzeugen, indem das Aufzeichnungsmaterial, in dem das Doppelhologramm gespeichert ist, mit anderen Substratschichten zu einem Dokumentenkörper zusammengefügt wird, wobei die anderen Substratschichten jeweils in einem Bereich, der einen Aufzeichnungsbereich des Doppelhologramms in dem Aufzeichnungsmaterial überlagert oder von diesem überlagert ist, für die Wellenlänge von Rekonstruktionslicht, mit der das Doppelhologramm rekonstruierbar ist, transparent sind.

Eine Vorrichtung zum Herstellen eines Doppelhologramms in einem Belichtungsschritt umfasst eine Halterung zur Aufnahme von Aufzeichnungsmaterial in einer Materialebene. Die Vorrichtung umfasst ferner eine Lichtquelle zum Erzeugen von kohärentem Licht und einen Strahlteiler zum Aufteilen des kohärenten Lichts in einen Objektanteil und einen Referenzanteil. Ferner umfasst die Vorrichtung optische Führungselemente, die so angeordnet sind, dass der Objektanteil auf ein Objekt zum Ausleuchten oder Beleuchten des Objekts führbar ist und von dem ausgeleuchteten Objekt ausgehendes Licht auf eine Objektseite der Halterung auftrifft und diese durchstrahlen kann. Die optischen Führungselemente sind ferner so angeordnet, dass der Referenzanteil auf eine von der Objektseite abgewandte Seite der Halterung und unter einem Referenzwinkel gegenüber der Materialebene auftrifft und die Halterung durchstrahlt. Ferner ist vorgesehen, dass beabstandet von der Objektseite der Halterung eine Reflexionseinrichtung ausgebildet ist, die das Referenzlicht, das die Halterung durchstrahlt hat, in sich zurückreflektiert.

Vorteil der Erfindung ist es, dass auf einfache Weise ein neues komplexes Sicherheitsmerkmal erzeugt wird, bei dem das Hologramm sowohl in Reflexion als auch in Transmission rekonstruierbar ist.

Als besonders vorteilhaft hat es sich herausgestellt, dass zumindest das Licht des Referenzanteils über eine Strahlformungsoptik parallelisiert wird. Dieses parallelisierte Licht trifft dann auf das Aufzeichnungsmaterial und kann ferner sehr effektiv nach dem Durchstrahlen des Aufzeichnungsmaterials mit einer ebenen Reflexionseinrichtung, optimaler Weise mit einer an die Wellenlänge, welche zur Belichtung verwendet wird, angepassten Reflexionseinrichtung, in sich selbst zurückreflektiert werden. Eine Lichtstrahlung, die aus parallelisierten Lichtstrahlen besteht, lässt sich besonders einfach und effizient mit einer ebenen Reflexionseinrichtung in sich selbst zurückreflektieren.

Um eine Individualisierung und Speicherung einer beliebigen Information in ein solches Doppelhologramm zu ermöglichen, ist bei einer Ausführungsform vorgesehen, dass das Objekt eine Flächenmustererzeugungseinrichtung umfasst, die über eine Fläche des Objekts ortsaufgelöst eine Intensität des von dem Objekt ausgehenden Objektlichts moduliert.

Bei einer ganz einfachen Ausführungsform kann das Objekt eine Durchstrahlungsmaske umfassen, welche transparente Bereiche und vollständig opake Bereiche umfasst.

In weiter spezialisierten Verfahren kann vorgesehen sein, dass die ortsaufgelöste Intensitätsmodulation des Objekts mit einem örtlichen Lichtmodulator (SLM spacial light modulator) ausgeführt sein kann. Hierfür kommen unterschiedliche ortsaufgelöste Lichtmodulatoren, wie LCD-Schirme, aber auch sogenannte LCOS (liquid crystal on silicon) etc. zum Einsatz.

Um eine Wahrnehmbarkeit der gespeicherten Information zu steigern und die Winkelselektivität des erzeugten Volumenhologramms hinsichtlich der Rekonstruktion des Hologramms "zu lockern", ist bei einer Ausführungsform vorgesehen, dass das Objekt einen Diffusor umfasst. Beispielsweise kann angrenzend an eine die Objektlichtstrahlung des Objekts modulierende Maske ein Diffusor angeordnet sein. Dieser weitet an jeder Stelle, an der er beleuchtet wird, vorzugsweise das auftreffende Licht in einen gewissen Lichtkegel auf, beispielsweise in der Weise, dass jeder Punkt der Oberfläche des Diffusors wie ein Lambert-Strahler wirkt.

Um die Information möglichst in dem Hologramm zu verbergen, ist bei einer Ausführungsform vorgesehen, dass das von dem Objekt ausgehende Licht über eine Sammellinsenanordnung geführt wird, in deren einem Fokus das Aufzeichnungsmaterial angeordnet ist. Bei einer möglichen Variante ist das Objekt, beispielsweise ein über einen räumlichen Lichtmodulator ausgeleuchteter Diffusor, im anderen Fokus der Sammellinsenanordnung angeordnet. Der Diffusor kann beispielsweise eine Streuschreibe sein.

Um eine ausreichende Flexibilität bei der Belichtung des Objekts in das Aufzeichnungsmaterial zu erhalten, ist bei einer Ausführungsform vorgesehen, dass das Reflektieren des das Aufzeichnungsmaterial durchstrahlenden Referenzanteils beabstandet von dem Aufzeichnungsmaterial auf der dem Objekt zugewandten Seite des Aufzeichnungsmaterials erfolgt.

Zum einen ist es möglich, auf die beschriebene Art und Weise unmittelbar Doppelhologramme zu belichten. Bei einer Großserienfertigung ist es jedoch auch möglich, ein so erzeugtes Doppelhologramm als Hologrammmaster oder Anteil eines Hologrammmasters zu verwenden, gegebenenfalls mit weiteren beugenden Strukturen, die als Hologramm oder andersartig auf dem Hologrammmaster ausgebildet sind. Das Doppelhologramm des Hologrammmasters kann dann in einem Kontaktkopierverfahren in einer nicht anspruchsgemäßen Weise dupliziert werden, dass an eine Kontaktseite des Masters, welche jene Seite ist, die bei der Erstellung des Doppelhologramms von dem Objekt zugewandt war, ein Aufzeichnungsmaterial aufgebracht wird, kohärentes Rekonstruktionslicht erzeugt wird, welches geeignet ist, das Doppelhologramm zu rekonstruieren, führen des Rekonstruktionslicht durch das Aufzeichnungsmaterial unter einem Rekonstruktionswinkel, der einem Referenzwinkel bei der Herstellung des Doppelhologramms entspricht, auf den Hologrammmaster, sodass in dem Aufzeichnungsmaterial eine Kopie des Hologrammmasters entsteht. Über eine solche Kontaktkopie, die dem Duplizieren eines Reflexionsvolumenhologramms entspricht, kann somit das erfindungsgemäße Doppelhologramm auf einfache Weise kostengünstig und effektiv dupliziert werden.

Um eine Individualisierung während des Duplizierens zu erreichen, ist es möglich, das Rekonstruktionslicht über einen örtlichen Lichtmodulator zu modulieren. Vorzugsweise ist das Rekonstruktionslicht ebenfalls eine aus parallelisierten Lichtstrahlen bestehende Referenzlichtstrahlung.

Gemäß der Erfindung wird somit ein Sicherheitsdokument mit einem Doppelhologramm geschaffen, bei dem das Doppelhologramm gemäß dem oben beschriebenen Verfahren hergestellt ist und in einen Dokumentenkörper integriert ist, in dem das Aufzeichnungsmaterial, in dem das Doppelhologramm gespeichert ist, mit anderen Substratschichten zu einem Dokumentenkörper zusammengefügt ist, wobei die anderen Substratschichten jeweils in einem Bereich, der den Aufzeichnungsbereich des Doppelhologramms im Aufzeichnungsmaterial überlagert oder von diesem überlagert ist, für die Wellenlänge von Rekonstruktionslicht, mit der das Doppelhologramm rekonstruierbar ist, transparent sind. In dem transparenten Bereich des Sicherheitsdokuments, der auch als Fensterbereich bezeichnet wird, da dieser für Licht, welches nicht von dem Doppelhologramm gebeugt wird, lichtdurchlässig ist, kann das Doppelhologramm zum einen in einer Reflexionsgeometrie rekonstruiert werden und zum anderen beim Durchstrahlen von der gegenüberliegenden Seite des Sicherheitsdokuments durch das Dokument hindurch das ebenfalls gespeicherte Transmissionshologramm rekonstruiert werden.

Eine Herstellung eines solchen Doppelhologramms erfolgt mit einer Vorrichtung in einem Belichtungsschritt. Die Vorrichtung umfasst eine Halterung zur Aufnahme von Aufzeichnungsmaterial in einer Materialebene. Ferner umfasst die Vorrichtung eine Lichtquelle zum Erzeugen von kohärentem Licht und einen Strahlteiler zum Aufteilen des kohärenten Lichts in einen Objektanteil und einen Referenzanteil. Die Vorrichtung umfasst außerdem optische Führungselemente, die so angeordnet sind, dass der Objektanteil auf ein Objekt zum Ausleuchten oder Beleuchten des Objekts führbar ist und von dem ausgeleuchteten oder beleuchteten Objekt ausgehendes Objektlicht auf einer Objektseite der Halterung auftrifft und diese durchstrahlen kann. Die optischen Führungselemente sind ferner so angeordnet, dass der Referenzanteil auf eine von der Objektseite angewandte Seite der Halterung unter einem Referenzwinkel gegenüber der Materialebene auftrifft und die Halterung durchstrahlt. Ferner ist eine Reflexionseinrichtung beabstandet von der Objektseite der Halterung ausgebildet, die den Referenzanteil, der die Halterung durchstrahlt hat, in sich zurückreflektiert. Hierbei kann beispielsweise ein Spiegel eingesetzt werden. Ist das Referenzlicht vor dem Durchstrahlen des Aufzeichnungsmaterials parallelisiert, so kann dieser Spiegel ein ebener Spiegel sein.

Bei einer Weiterbildung der Vorrichtung ist vorgesehen, dass das Objekt eine Flächenmustererzeugungseinrichtung umfasst, die bei der Ausleuchtung oder Beleuchtung mit dem Objektanteil des kohärenten ortsaufgelöst über eine Fläche des Objekts eine Intensität des von dem Objekt ausgehenden Objektlichts moduliert, und umfasst ferner vorzugsweise einen Diffusor, der das ortsaufgelöste modulierte Objektlicht diffus aufweitet und zwischen der Flächenmustererzeugungseinrichtung und der Halterung angeordnet ist, wobei zwischen dem Diffusor und der Halterung zusätzlich eine Sammellinsenanordnung angeordnet ist, in deren einen Fokus der Diffusor und in deren anderen Fokus die Materialebene der Halterung liegt.

Die Erfindung wird nachfolgend in Bezugnahme auf eine Zeichnung näher erläutert. Hierbei zeigen:
- Fig. 1: eine schematische Darstellung einer Vorrichtung zum Erzeugen eines Doppelhologramms;
- Fig. 2: eine weitere Ausführungsform zum Erzeugen eines Doppelhologramms;
- Fig. 3: eine schematische Ansicht eines Hologrammmasters;
- Fig. 4: eine schematische Darstellung einer Vorrichtung zum Duplizieren eines Doppelhologramms nach einer nicht anspruchsgemäßen Ausführungsform;
- Fig. 5: eine Ansicht eines Dokuments mit einem Doppelhologramm, bei dem das Doppelhologramm in Reflexion rekonstruiert wird; und
- Fig. 6: eine Ansicht eines Dokuments mit einem Doppelhologramm, bei dem das Doppelhologramm in Transmission rekonstruiert wird.

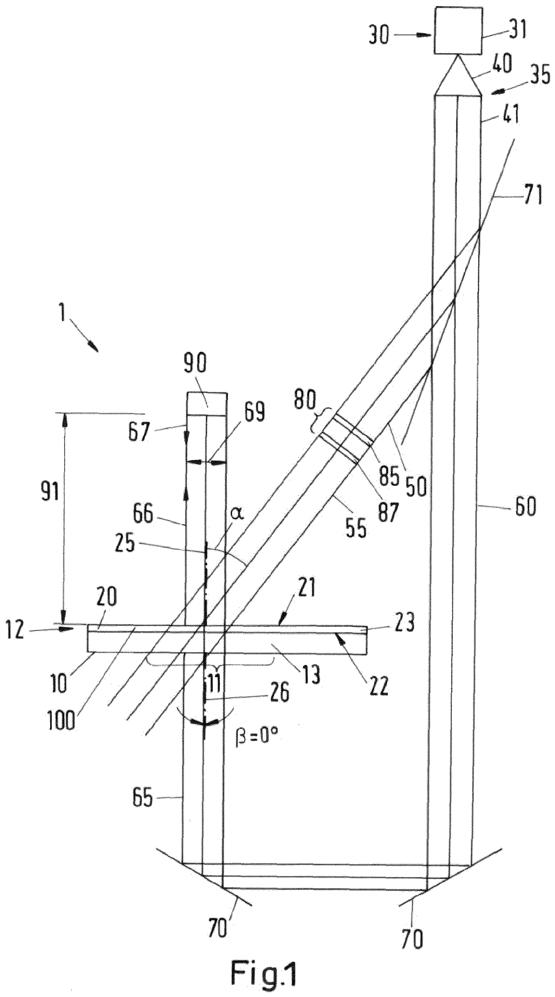

In Fig. 1 ist schematisch eine Vorrichtung 1 zum Herstellen eines Doppelhologramms 100 dargestellt. Die Vorrichtung 1 umfasst eine Halterung 10, auf der ein Aufzeichnungsmaterial 20 in einer Materialebene 12 der Halterung 10 gehalten wird. Das Aufzeichnungsmaterial 20 kann jedes geeignete Material sein, in welchem Interferenzmuster von kohärentem Licht als Hologramm gespeichert werden können. Besonders bevorzugt werden Schichten aus Fotopolymeren. Die Halterung 10 ist zumindest in einem Bereich 11 für Licht, welches zum Belichten des Doppelhologramms 100 in das Aufzeichnungsmaterial 20 verwendet wird, transparent. Beispielsweise kann die Halterung 10 im Bereich 11 eine transparente Platte 13 aufweisen, an der das Aufzeichnungsmaterial 20 anliegt. Das Aufzeichnungsmaterial 20 kann in Form eines kontinuierlichen Films, gegebenenfalls mit einer Träger- und Schutzschicht versehen, bereitgestellt werden oder auch in Form von bogenförmigen Folien, ebenfalls gegebenenfalls mit einer Träger- und/oder Schutzschicht.

Die Vorrichtung 1 umfasst ferner eine Lichtquelle 30, die kohärentes Licht erzeugt. Vorzugsweise ist die Lichtquelle 30 als Laser 31 ausgebildet. Die Lichtquelle 30 erzeugt kohärentes Licht 40, welches in der dargestellten Ausführungsform beispielsweise über Strahlformungselemente 35 in einen aufgeweiteten, parallelisierten Lichtstrahl 41 aus einzelnen parallelen Lichtstrahlen überführt wird. Das Licht 40 bzw. der aufgeweitete parallelisierte Lichtstrahl 41 werden an einem Strahlteiler 71 in einen Objektanteil 50 und einen Referenzanteil 60 aufgeteilt. Der Referenzanteil 50 wird genutzt, um ein Objekt 80 auszuleuchten oder zu beleuchten. Das von dem Objekt 80 ausgehende Objektlicht 55 trifft auf das Aufzeichnungsmaterial 20 und durchstrahlt dieses und ebenso die Halterung 10. Das Objektlicht 55 trifft auf eine dem Objekt 80 zugewandte Seite 21 des Aufzeichnungsmaterials 20 unter einem Objektwinkel α. Durchquert das Volumen 23 des Aufzeichnungsmaterials 20 und tritt auf der abgewandten Seite 22 aus dem Aufzeichnungsmaterial 20 aus.

Der Referenzanteil 60 des Lichts 40 wird über optische Führungselemente 70, beispielsweise Spiegel, Prismen, usw., so geführt, dass dieser als Referenzlicht 65 die Halterung 10 durchstrahlt und unter einem Referenzwinkel β auf die abgewandte Seite 22 des Aufzeichnungsmaterials 20 auftrifft, das Volumen 23 durchstrahlt und auf der dem Objekt 80 zugewandten Seite des Aufzeichnungsmaterials 20 aus dem Aufzeichnungsmaterial 20 austritt. In der dargestellten Ausführungsform beträgt der Referenzwinkel β gemessen gegen die Oberflächennormale 26 der angewandten Seite 22 des Aufzeichnungsmaterials 20 0 Grad. Im Volumen 23 des Aufzeichnungsmaterials 20 interferieren das Objektlicht 55 und das Referenzlicht 65, um ein Volumenreflexionshologramm des Objekts 80 in dem Aufzeichnungsmaterial 20 in Form eines Interferenzmusters zu speichern.

Bei dem Objekt 80 kann es sich prinzipiell um ein beliebiges Objekt handeln. Besonders geeignet sind jedoch Objekte, bei denen das von dem Objekt 80 ausgehende Objektlicht 55 über eine Fläche des Objekts 80 hinsichtlich der Intensität deutlich moduliert ist. Das Objekt 80 kann deshalb beispielsweise einen räumlichen Lichtmodulator 85, beispielsweise in Form einer Durchstrahlungsmaske, umfassen. Um nacheinander hergestellte Doppelhologramme 100 mit individueller Information versehen zu können, das heißt, das einbelichtete Objekt bzw. dessen Information leicht ändern zu können, umfasst das Objekt 80 vorzugsweise einen steuerbaren räumlichen Lichtmodulator 85, der beispielsweise als LCD-Schirm, oder auch als LCOS (liquid crystal on silicon) oder ähnliches ausgebildet sein kann. Die Durchstrahlungsmaske des Lichtmodulators 85 kann jedoch in einfachen Ausführungsformen auch nur eine statische Maske sein.

Zusätzlich zu dem Volumenreflexionshologramm des Objekts 80 wird bei der dargestellten Ausführungsform jedoch auch noch ein Transmissionshologramm eingespeichert, indem das aus der dem Objekt zugewandten Seite 21 des Aufzeichnungsmaterials 20 austretende Referenzlicht 66 über eine Reflexionseinrichtung 90 in sich zurückreflektiert wird und als reflektiertes Referenzlicht 67 über die dem Objekt 80 zugewandte Seite 21 des Aufzeichnungsmaterials 20 in das Volumen 23 eindringt und dort die Bildung des Interferenzmusters mit dem Objektlicht 55 beeinflusst. Ein Abstand 91 der Reflexionseinrichtung 90 von dem Aufzeichnungsmaterial 20 ist vorzugsweise größer als ein Strahldurchmesser 69 des Referenzlichts 66/67.

In einem Belichtungsschritt werden somit ein Volumenreflexionshologramm und ein Volumentransmissionshologramm in das Aufzeichnungsmaterial 20 belichtet. Dieses ergibt das Doppelhologramm 100, welches als Sicherheitselement in Sicherheitserzeugnissen verwendet werden kann. Der dargestellte Referenzwinkel β kann auch abweichend von der dargestellten Ausführungsform gewählt werden.

Da Volumenhologramme eine hohe Wellenlängen- und Winkelselektivität zeigen, ist eine Rekonstruktion nur mit geeignetem Licht einer Wellenlänge und unter definierten Winkeln möglich. Um die Winkelselektivität abzuschwächen, ist bei einigen Ausführungsformen vorgesehen, dass das Objekt zusätzlich einen Diffusor 87, beispielsweise in Form einer Streuscheibe umfasst. Dies führt dazu, dass von einzelnen Orten von der Oberfläche des Objekts das Licht jeweils in einen Kegelbereich abgestrahlt wird. Die Winkelselektivität des erzeugten Hologramms, die durch den Holografieprozess bedingt ist, wird hierdurch nicht unmittelbar geändert, jedoch wird ein Hologramm eines Objekts aufgezeichnet, welches Licht in unterschiedliche Richtungen aussendet. Dies führt bei der Rekonstruktion dazu, dass die Betrachtung in einem größeren Winkelbereich möglich ist.

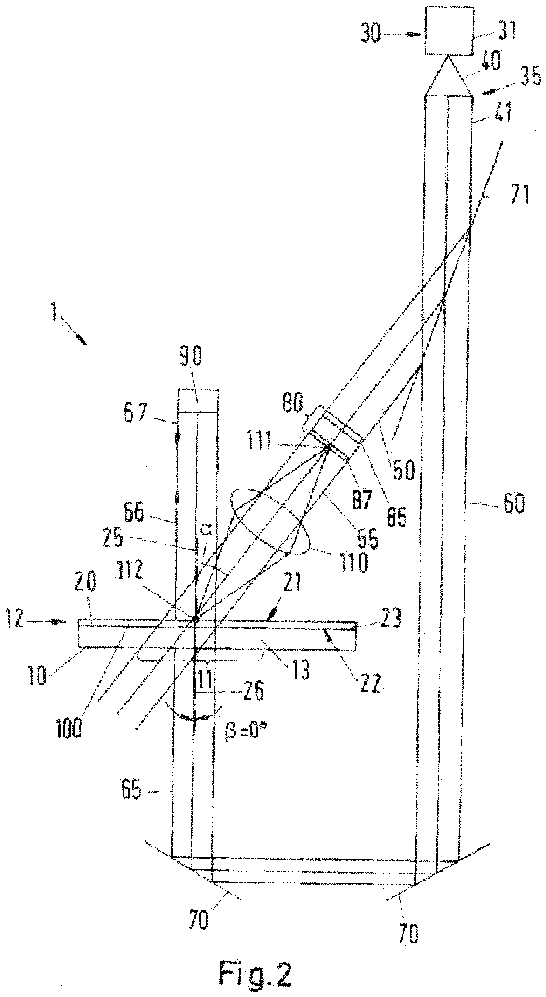

In Fig. 2 ist eine weitere Ausführungsform gezeigt, die sich von der Ausführungsform nach Fig. 1 dadurch unterscheidet, dass für die Belichtung des Doppelhologramms zwischen dem Objekt und dem Aufzeichnungsmaterial eine Sammellinse oder Sammellinsenanordnung 110 angeordnet sind, in deren einen Fokus 111 sich das Aufzeichnungsmaterial 20 befindet. Bei der dargestellten Ausführungsform befindet sich der Diffusor 87 des Objekts 80 im anderen Fokus 112 der Sammellinse bzw. Sammellinsenanordnung 110. Bei dieser Fouriergeometrie erhält man ein verstecktes Hologramm.

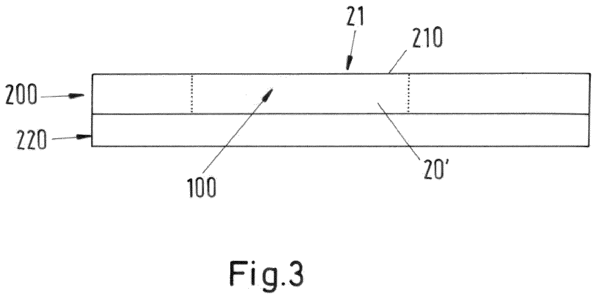

In Fig. 3 ist eine schematische Darstellung für einen Hologrammmaster 200 dargestellt, welcher ein Doppelhologramm 100 als einen Bestandteil umfasst. Das mit dem oben beschriebenen Verfahren in einem Belichtungsschritt hergestellt Doppelhologramm 100 ist in den Hologrammmaster 200 so integriert, dass eine bei der Herstellung dem Objekt zugewandte Seite 21 des Aufzeichnungsmaterials einer Oberseite 210 des Hologrammmasters zugewandt ist. Zusätzlich zu dem entwickelten Aufzeichnungsmaterial 20' umfasst der Hologrammmaster beispielsweise eine zusätzliche Trägerschicht 220. Diese ist vorzugsweise aus transparentem Material gebildet.

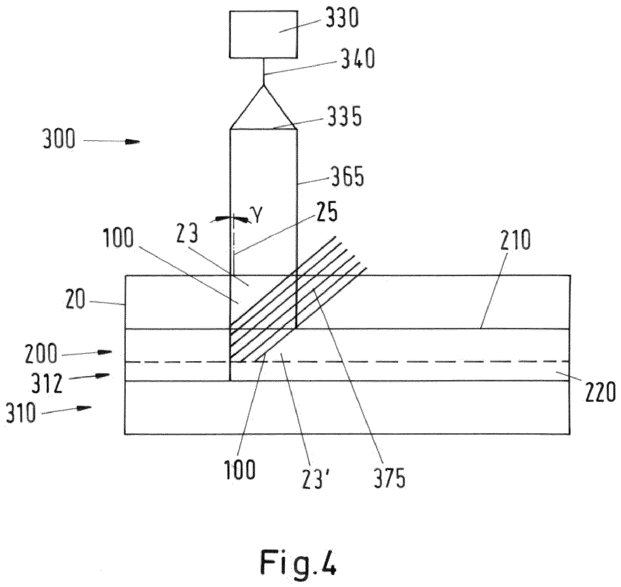

In Fig. 4 ist schematisch eine Ausführungsform einer Vorrichtung 300 dargestellt, mit der das Doppelhologramm 100 in einem Hologrammmaster 200, welcher beispielsweise ähnlich zu dem Hologrammmaster 200 nach Fig. 3 ausgebildet ist, nicht anspruchsgemäß dupliziert werden kann. Auf einer Halterung 310 ist der Hologrammmaster 200 in einer Materialebene 312 so angeordnet, dass eine Oberseite 210 des Hologrammmasters 200 von der Halterung 310 abgewandt ist. In Kontakt mit der Oberseite 210 des Hologrammmasters 200 wird ein Aufzeichnungsmaterial 20 angeordnet.

Eine Lichtquelle 330 erzeugt Rekonstruktionslicht 340, dessen Wellenlänge so angepasst ist, dass diese das in dem Hologrammmaster 200 gespeicherte Doppelhologramm 100 rekonstruieren kann. Die Wellenlänge des Rekonstruktionslicht 340 kann leicht von der Wellenlänge des Lichts 40 abweichen, mit dem das Doppelhologramm 100 des Hologrammmasters 200 gemäß einer der Vorrichtungen nach Fig. 1 oder 2 hergestellt ist, da beim Entwickeln und/oder Fixieren des Hologramms Schrumpfungs- oder Schwellprozesse auftreten können, welche dazu führen, dass die für die Rekonstruktion benötigte Wellenlänge leicht von der Wellenlänge abweicht, mit der das Hologramm ursprünglich belichtet ist. Alternativ oder zusätzlich kann in einem solchen Fall auch der Winkel, unter dem das für die Rekonstruktion eingestrahlte Rekonstruktionslicht auf das Doppelhologramm bei der Rekonstruktion eingestrahlt wird, ein wenig angepasst werden.

Über eine Strahlformungseinrichtung 335 wird aus dem Rekonstruktionslicht 300 aufgeweitetes und parallelisiertes Rekonstruktionslicht 365, das in seinen Eigenschaften, bis auf die oben erwähnte gegebenenfalls notwendige Abweichung in der Wellenlänge dem Referenzlicht bei der Belichtung des Doppelhologramms 100 des Hologrammmasters 200 entspricht. Dieses wird über eine Oberseite 21 des Aufzeichnungsmaterials 20 unter dem Rekonstruktionswinkel γ, welche dem Referenzwinkel β bei der Herstellung des Doppelhologramms 100 des Hologrammmasters 200 entspricht, auf das Aufzeichnungsmaterial 20 gestrahlt. Das Rekonstruktionslicht 365 durchdringt das Volumen 23 des Aufzeichnungsmaterials und tritt auf der abgewandten Seite 22 aus dem Aufzeichnungsmaterial aus und in den Hologrammmaster 200 über dessen Oberseite 210 in das Volumen 23' ein, indem das Doppelhologramm 100 des Hologrammmasters 200 gespeichert ist. Das Rekonstruktionslicht rekonstruiert das Doppelhologramm 100, sodass die die in dem Doppelhologramm 100 gespeicherte Information repräsentierende Lichtstrahlung 375 in das Aufzeichnungsmaterial 20 rekonstruiert wird und dort mit dem Rekonstruktionslicht 365 interferiert, um das duplizierte Doppelhologramm 100 zu erzeugen.

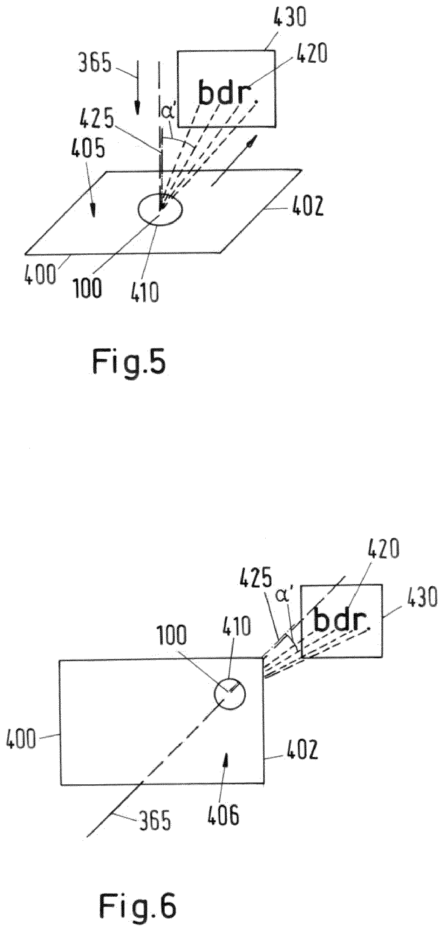

In Fig. 5 und 6 ist schematisch jeweils ein Sicherheitsdokument 400 dargestellt, in welches ein Doppelhologramm 100 als Sicherheitselement integriert ist. Das Doppelhologramm 100 ist jeweils in einem Fensterbereich 410 ausgebildet. In Fig. 5 wird ein Referenzlichtstrahl 365 auf die Oberseite 405 des Dokumentenkörpers 402 des Sicherheitsdokuments 400 geführt. In Reflexion ergibt sich die Information 420, beispielsweise ein Schriftzug BDR, der über den räumlichen Lichtmodulator 85 (spatial light modulator) bei der Herstellung als Schriftzug in das Doppelhologramm 100 einbelichtet ist. Die Information (genauer eine Mitte der Information, die das gespeicherte Objekt repräsentiert) ist unter einem Objektrekonstruktionswinkel α' gegenüber einer Oberflächennormalen 425 jener Seite des Doppelhologramms 100 zu beobachten, die der Oberseite 405 des Sicherheitsdokuments 400 zugewandt ist. Der Objektrekonstruktionswinkel α' entspricht dem Objektwinkel α bei der Herstellung des Hologrammmasters 200 (vergl. Fig. 1 oder 2). Im Fensterbereich 410 ist das Sicherheitsdokument 400 im gesamten Volumen transparent.

In Fig. 6 ist die Situation gezeigt, bei der Rekonstruktionslicht 365 über die Unterseite 406 eingestrahlt wird. Dies führt zu einer Projektion der Information 420 auf einem Schirm 430 führt. Das neuartige Sicherheitselement kann somit dadurch geprüft werden, dass sowohl in Reflexion als auch in Transmission jeweils die selbe Information 420, die in dem Doppelhologramm gespeichert ist, auf einem Schirm 430 rekonstruiert werden kann. Auch hier ist die Information unter dem Objektrekonstruktionswinkel α' gegenüber der Oberflächennormalen jener Seite des Doppelhologramms 100 zu beobachten, die der Oberseite 405 des Sicherheitsdokuments 400 zugewandt ist.

### Bezugszeichenliste

- 1: Vorrichtung
- 10: Halterung
- 11: Bereich
- 12: Materialebene
- 13: transparente Platte
- 20: Aufzeichnungsmaterial
- 20': belichtetes und entwickeltes Aufzeichnungsmaterial
- 21: zugewandte Seite
- 22: abgewandte Seite
- 23: Volumen
- 25: Oberflächennormale der zugewandten Seite
- 26: Oberflächennormale der zugewandten Seite
- 30: Lichtquelle
- 31: Laser
- 35: Strahlformungselemente
- 40: Licht
- 41: aufgeweiteter parallelisierter Lichtstrahl
- 50: Objektanteil
- 55: Objektlicht
- 60: Referenzanteil
- 65: Referenzlicht
- 66: austretendes Referenzlicht
- 67: reflektiertes Referenzlicht
- 69: Strahldurchmesser
- 70: optische Führungselemente
- 71: Strahlteiler
- 80: Objekt
- 85: räumlicher Lichtmodulator (SLM-spacial light modulator)
- 87: Diffusor (Streuscheibe)
- 90: Reflexionseinrichtung
- 91: Abstand
- 100, 100': Doppelhologramm
- 110: Sammellinsenanordnung
- 111: ein Fokus
- 112: anderer Fokus
- 200: Hologrammmaster
- 210: Oberseite
- 220: Trägerschicht
- 300: Vorrichtung
- 310: Halterung
- 312: Materialebene
- 330: Lichtquelle
- 340: Rekonstruktionslicht
- 335: Strahlformungseinrichtung
- 365: aufgeweitetes und parallelisiertes Rekonstruktionslicht
- 375: Lichtstrahlung
- 400: Sicherheitsdokument
- 402: Dokumentenkörper
- 405: Oberseite
- 406: Unterseite
- 410: Fensterbereich
- 420: Information
- 425: Oberflächennormale
- 430: Schirm
- α: Objektwinkel
- α': Objektrekonstruktionswinkel
- β: Referenzwinkel
- γ: Rekonstruktionswinkel

## Patentansprüche

1. Verfahren zum Herstellen eines Doppelhologramms (100) als Sicherheitsmerkmal umfassend die Schritte:
Bereitstellen eines Aufzeichnungsmaterials (20);
Erzeugen kohärenten Lichts (40), welches in einen Referenzanteil (60) und einen Objektanteil (50) aufgeteilt wird;
Führen des Objektanteils (50) auf ein Objekt (80), so dass von dem Objekt (80) ausgehendes Objektlicht (55) auf eine dem Objekt (80) zugewandte Seite (21) des Aufzeichnungsmaterials (20) auftritt und dieses durchstrahlt, **gekennzeichnet durch** Führen des Referenzanteils (60), so dass dieser Referenzanteil (60) unter einem Referenzwinkel (β) auf eine von dem Objekt (80) abgewandte Seite (22) des Aufzeichnungsmaterials (20) auftrifft und dieses durchleuchtet; so dass ein mit dem Objektlicht (55) entstehendes Interferenzmuster in dem Aufzeichnungsmaterial (20) aufgezeichnet wird, wobei der aus der zugewandten Seite (21) des Aufzeichnungsmaterials (20) austretende Referenzanteil (66) in sich selbst zurückreflektiert wird, so dass der reflektierte Referenzanteil (67) auf das Interferenzmuster einwirkt.

2. Verfahren nach Anspruch 1, wobei das Referenzlicht über eine Referenzlichtoptik parallelisiert wird.

3. Verfahren nach einem der Ansprüche 1 oder 2, **dadurch gekennzeichnet, dass** das Objekt (80) eine Flächenmustererzeugungseinrichtung (85) umfasst, die über eine Fläche des Objekts (80) ortsaufgelöst eine Intensität des von dem Objekt (80) ausgehenden Objektlichts (55) moduliert.

4. Verfahren nach einem der vorangehenden Ansprüche, wobei das Objekt (80) einen Diffusor (87) umfasst.

5. Verfahren nach einem der vorangehenden Ansprüche, **dadurch gekennzeichnet, dass** das Objektlicht (55) durch eine Sammellinsenanordnung (110) geführt wird, in deren einem Fokus (111) sich das Aufzeichnungsmaterial (20) und in deren anderem Fokus (112) sich das Objekt (80) befindet.

6. Verfahren nach einem der vorangehenden Ansprüche, **dadurch gekennzeichnet, dass** das Zurückreflektieren des Referenzanteils (66) beabstandet, insbesondere in einem Abstand, der mindestens einer Größenordnung eines Strahldurchmessers des Referenzanteils (60) entspricht, von der zugewandten Seite (21) des Aufzeichnungsmaterials (20) erfolgt.

7. Sicherheitsdokument (400) mit einem als Sicherheitsmerkmal ausgebildeten Doppelhologramm (100), **dadurch gekennzeichnet, dass** ein mit einem Verfahren nach einem der Ansprüche 1 bis 6 hergestellt Doppelhologramm (100) in einen Dokumentenkörper (402) integriert wird, indem das Aufzeichnungsmaterial (20), in dem das Doppelhologramm (100) gespeichert ist, mit anderen Substratschichten zu einem Dokumentenkörper (402) zusammengefügt wird, wobei die anderen Substratschichten jeweils in einem Bereich, der den Aufzeichnungsbereich des Doppelhologramms (100) im Aufzeichnungsmaterials (20) überlagert oder von diesem überlagert ist, für die Wellenlänge von Rekonstruktionslicht (365), mit der das Doppelhologramm (100) rekonstruierbar ist, transparent sind.

8. Vorrichtung zum Herstellen eines Doppelhologramms (100) als Sicherheitsmerkmal in einem Belichtungsschritt umfassend
eine Halterung (10) zur Aufnahme von Aufzeichnungsmaterial (20) in einer Materialebene (12);
eine Lichtquelle (30) zum Erzeugen von kohärentem Licht (40);
einen Strahlteiler (71) zum Aufteilen des kohärenten Lichts (40) in einen Objektanteil (50) und einen Referenzanteil (60) und
optische Führungselemente (70), die so angeordnet sind, dass der Objektanteil (50) auf ein Objekt (80) zum Ausleuchten oder Beleuchten des Objekts (80) geführt wird, und von dem ausgeleuchteten oder beleuchteten Objekt (80) ausgehendes Objektlicht (55) auf eine Objektseite der Halterung (10) auftrifft und diese durchstrahlen kann und der Referenzanteil (60) auf eine von der Objektseite abgewandte Seite der Halterung (10) unter einem Referenzwinkel (β) gegenüber der Materialebene (12) auftrifft und die Halterung (10) durchstrahlt,
wobei beabstandet von der Objektseite der Halterung (10) eine Reflexionseinrichtung (90) ausgebildet ist, die das Referenzlicht (66), das die Halterung (10) durchstrahlt hat, in sich zurückreflektiert.

9. Vorrichtung (1) nach Anspruch 8, **dadurch gekennzeichnet, dass** das Objekt (80) eine Flächenmustererzeugungseinrichtung (85), die bei der Ausleuchtung oder Beleuchtung mit dem Objektanteil (50) ortsaufgelöst über eine Fläche des Objekts (80) eine Intensität des von dem Objekt (80) ausgehenden Objektlichts (55) moduliert, und einen Diffusor (87) umfasst, der das ortsaufgelöst modulierte Objektlicht (55) diffus aufweitet und zwischen der Flächenmustererzeugungseinrichtung (85) und der Halterung (10) angeordnet ist, wobei zwischen dem Diffusor (87) und der Halterung (10) zusätzlich eine Sammellinsenanordnung (110) angeordnet ist, in deren einen Fokus (111) die Materialebene (12) der Halterung (10) und deren anderem Fokus (112) der Diffusor (87) liegt.

## Claims

1. A method for producing a double hologram (100) as a security feature, comprising the steps of:
providing a recording material (20);
generating coherent light (40), which is split into a reference component (60) and an object component (50);
directing the object component (50) onto an object (80) such that object light (55) emanating from the object (80) strikes a side (21) of the recording material (20) facing the object (80) and passes through it, **characterized by**
directing the reference component (60) such that this reference component (60) strikes at a reference angle (β) a side (22) of the recording material (20) facing away from the object (80) and passes through it;
so that an interference pattern generated by the object light (55) is recorded in the recording material (20), wherein the reference component (66) emerging from the facing side (21) of the recording material (20) is reflected back onto itself, so that the reflected reference component (67) interacts with the interference pattern.

2. The method according to claim 1, wherein the reference light is collimated by means of a reference light optical system.

3. A method according to any one of claims 1 or 2, **characterized in that** the object (80) comprises a surface pattern generation device (85) that modulates, with spatial resolution, the intensity of the object light (55) emitted by the object (80) across a surface of the object (80).

4. A method according to any of the preceding claims, wherein the object (80) comprises a diffuser (87).

5. A method according to any of the preceding claims, **characterized in that** the object light (55) is directed through a converging lens arrangement (110), with the recording material (20) located at one focal point (111) of the assembly and the object (80) located at the other focal point (112).

6. A method according to any of the preceding claims, **characterized in that** the reference component (66) is back-reflected at a distance-in particular, at a distance corresponding to at least one order of magnitude of the beam diameter of the reference component (60)-from the facing side (21) of the recording material (20).

7. A security document (400) comprising a double hologram (100) designed as a security feature, **characterized in that** a double hologram (100) produced by a method according to any one of claims 1 through 6 is integrated into a document body (402) by combining the recording material (20), in which the double hologram (100) is stored, with other substrate layers to form a document body (402) , wherein the other substrate layers are each transparent, in a region that overlaps the recording region of the double hologram (100) in the recording material (20) or is overlapped by it, to the wavelength of reconstruction light (365) with which the double hologram (100) can be reconstructed.

8. A device for producing a double hologram (100) as a security feature in a single exposure step, comprising
a holder (10) for holding recording material (20) in a material plane (12);
a light source (30) for generating coherent light (40);
a beam splitter (71) for splitting the coherent light (40) into an object component (50) and a reference component (60); and
optical guiding elements (70) arranged such that the object component (50) is directed onto an object (80) to illuminate the object (80), and such that object light (55) emanating from the illuminated object (80) strikes an object side of the holder (10) and can pass through it, and such that the reference component (60) strikes a side of the holder (10) facing away from the object side at a reference angle (β) relative to the material plane (12) and passes through the holder (10),
wherein
a reflection device (90) is formed at a distance from the object side of the holder (10), which reflects back into itself the reference light (66) that has passed through the holder (10).

9. Apparatus (1) according to claim 8, **characterized in that** the object (80) comprises a surface pattern generation device (85) which, when illuminated by the object beam (50), modulates the intensity of the object light (55) emitted by the object (80) in a spatially resolved manner across a surface of the object (80), and a diffuser (87) that diffusely spreads the spatially resolved, modulated object light (55) and is arranged between the surface pattern generation device (85) and the holder (10), wherein a converging lens arrangement (110) is additionally arranged, with the material plane (12) of the holder (10) lying at one focal point (111) thereof and the diffuser (87) lying at its other focal point (112).

## Revendications

1. Procédé de fabrication d'un hologramme double (100) servant de dispositif de sécurité, comprenant les étapes suivantes :
fournir un matériau d'enregistrement (20) ;
générer une lumière cohérente (40) qui est divisée en une composante de référence (60) et une composante objet (50) ;
diriger la composante objet (50) vers un objet (80) de telle sorte que la lumière objet (55) émanant de l'objet (80) frappe une face (21) du matériau d'enregistrement (20) tournée vers l'objet (80) et traverse celui-ci, **caractérisé par**
le guidage de la composante de référence (60) de telle sorte que cette composante de référence (60) frappe, sous un angle de référence (β), une face opposée (22) du matériau d'enregistrement (20) opposée à l'objet (80) et traverse celui-ci ; de sorte qu'un motif d'interférence résultant de la lumière objet (55) soit enregistré dans le matériau d'enregistrement (20), la composante de référence (66) émergeant de la face tournée vers l'objet (21) du matériau d'enregistrement (20) est réfléchie en retour, de sorte que la composante de référence réfléchie (67) agit sur le motif d'interférence.

2. Procédé selon la revendication 1, dans lequel la lumière de référence est collimatée au moyen d'un système optique de référence.

3. Procédé selon l'une des revendications 1 ou 2, **caractérisé en ce que** l'objet (80) comprend un dispositif de génération de motifs de surface (85) qui module, en différents points d'une surface de l'objet (80), l'intensité de la lumière objet (55) émise par l'objet (80).

4. Procédé selon l'une quelconque des revendications précédentes, dans lequel l'objet (80) comprend un diffuseur (87).

5. Procédé selon l'une quelconque des revendications précédentes, **caractérisé en ce que** la lumière objet (55) traverse un ensemble de lentilles convergentes (110), dont l'un des foyers (111) est occupé par le matériau d'enregistrement (20) et l'autre foyer (112) par l'objet (80).

6. Procédé selon l'une quelconque des revendications précédentes, **caractérisé en ce que** la réflexion en retour de la composante de référence (66) s'effectue à distance, notamment à une distance correspondant au moins à un ordre de grandeur du diamètre du faisceau de la composante de référence (60), de la face tournée vers l'objet (21) le matériau d'enregistrement (20).

7. Document de sécurité (400) comportant un hologramme double (100) conçu comme élément de sécurité, **caractérisé en ce qu'**un hologramme double (100), fabriqué selon un procédé selon l'une des revendications 1 à 6, est intégré dans un corps de document (402) en assemblant le matériau d'enregistrement (20), dans lequel l'hologramme double (100) est enregistré, avec d'autres couches de substrat pour former un corps de document (402) , les autres couches de substrat étant chacune transparentes, dans une zone qui recouvre la zone d'enregistrement de l'hologramme double (100) dans le matériau d'enregistrement (20) ou qui est recouverte par celle-ci, à la longueur d'onde de la lumière de reconstruction (365) permettant de reconstruire l'hologramme double (100).

8. Dispositif destiné à fabrication d'un hologramme double (100) servant de élément de sécurité en une seule étape d'exposition, comprenant
un support (10) destiné à recevoir un matériau d'enregistrement (20) dans un plan de matériau (12) ;
une source lumineuse (30) destinée à produire de la lumière cohérente (40)
un séparateur de faisceau (71) destiné à diviser la lumière cohérente (40) en une composante objet (50) et une composante de référence (60) ; et
des éléments de guidage optique (70), disposés de manière à diriger la composante objet (50) vers un objet (80) afin d'éclairer ou d'illuminer celui-ci (80), de sorte que la lumière objet (55) émise par l'objet (80) ainsi éclairé ou illuminé atteigne un côté objet du support (10) et puisse traverser celui-ci, et à diriger la composante de référence (60) vers un côté du support (10) opposé au côté objet, sous un angle de référence (β) par rapport au plan du matériau (12), de manière à ce que la composante de référence (60) frappe ce côté du support (10) et traverse celui-ci.
,
dans lequel
un dispositif de réflexion (90) est agencé à distance du côté objet du support (10), lequel dispositif réfléchit en en retour sur elle-même la lumière de référence (66) ayant traversé le support (10).

9. Dispositif (1) selon la revendication 8, **caractérisé en ce que** l'objet (80) comprend un dispositif de génération de motifs de surface (85) qui, lors de l'éclairage ou de l'illumination au moyen de la composante objet (50), module, avec une résolution spatiale sur une surface de l'objet (80), l'intensité de la lumière objet (55) émise par l'objet (80), et un diffuseur (87) qui élargit de manière diffuse la lumière objet (55) modulée avec une résolution spatiale et qui est disposé entre le dispositif de génération de motifs de surface (85) et le support (10), un système de lentilles convergentes (110) étant en outre disposé entre le diffuseur (87) et le support (10), le plan du matériau (12) du support (10) se trouvant à l'un des foyers (111) dudit système de lentilles convergentes (110) et le diffuseur (87) à l'autre foyer (112).
